# FASCICULE DE BREVET EUROPEEN

(11) **EP 1 090 546 B1**
(45) Date de publication et mention de la délivrance du brevet: **03.12.2003**
(21) Numéro de dépôt: 00402712.4
(22) Date de dépôt: 03.10.2000
(51) Int. Cl.: A01J 25/12, A01J 27/02

(54) **Procédé de fabrication, par moulage, d'un produit laitier ou fromager**
Verfahren zum Herstellen eines Milch- oder Käseproduktes durch Formen
Method for producing a milk or cheese product by moulding

(30) Priorité: 08.10.1999 FR 9912551
(43) Date de publication de la demande: 11.04.2001
(60) Demande divisionnaire: 03022231.9
(73) Titulaire: BONGRAIN S.A., 78223 Viroflay Cedex (FR)
(72) Inventeur: Illy, Bernard, 78730 Ponthevrard (FR); Couraud, Pascal, 28130 Hanches (FR); Fromage, Bernard, 78460 Chevreuse (FR)
(74) Mandataire: Jacquard, Philippe Jean-Luc

(56) Documents cités:
- EP-A- 0 811 664
- FR-A- 2 099 014
- FR-A- 2 206 055
- FR-A- 2 532 525

## Description

La présente invention a pour objet un procédé de fabrication par moulage d'un produit laitier ou fromager.

Il existe un certain nombre de procédés utilisés pour la réalisation de produits laitiers ou fromagers.

Un de ces procédés consiste à doser à chaud des fromages dans des moules en aluminium ou en plastique injecté ou thermoformé. Le document FR-2206055 décrit un tel precédé. Dans ce cas, le moule sert également d'emballage définitif pour le consommateur. Le procédé ne permet pas en particulier un enrobage du produit après dosage.

Il existe également des procédés de moulage de fromage ou de produits laitiers dans des moules recyclables, et dans ce cas, les produits à démouler doivent être suffisamment fermes pour être extraits par pression mécanique ou par vibrations ou bien encore, par soufflage à l'air. Ces procédés impliquent en général la mise en oeuvre d'agents démoulants.

En ce qui concerne la fabrication de produits pourvus d'un bâtonnet de préhension, il a été suggéré de réaliser un dosage à chaud dans des coques en plastique thermoformé, le bâtonnet étant déposé avant dosage. De plus, l'étanchéité étant assurée par le contact du bâtonnet avec la coque, ceci implique que le bâtonnet doit être très simple et de forme cylindrique. En outre, et comme indiqué précédemment dans ce genre de technique, le produit ne peut pas être enrobé.

Il a également été suggéré de réaliser des produits par extrusion avec dépose d'un bâtonnet avant ou après la découpe. Ce procédé ne convient que pour fabriquer des produits ayant une forme à deux dimensions résultant du profil de la filière utilisée et du système de découpe.

Il existe également des procédés de formage où l'on presse la matière dans une matrice, après quoi on éjecte le produit par pression mécanique ou par soufflage d'air. Ce procédé n'est utilisable que pour des produits fromagers ou laitiers ayant une texture fortement liée et élastique et ne convient pas au cas des pâtes peu liées (crémeuses ou friables).

La présente invention a pour objet un procédé qui permet de réaliser des produits ayant une forme désirée et qui convient en particulier au cas des pâtes fragiles mécaniquement (crémeuses ou friables), par exemple à un fromage fondu à la texture fondante.

L'invention concerne dans ce but un procédé de moulage d'un produit laitier ou fromager, mettant en oeuvre un dosage dudit produit dans au moins un moule, et tel que défini dans la revendication 1.

Le procédé met avantageusement en oeuvre, après le dosage, et de préférence au cours du refroidissement, une mise en place d'un bâtonnet de préhension du produit.

Après le démoulage, le procédé peut mettre en oeuvre un enrobage du produit.

Cet enrobage peut être en particulier réalisé par trempage, notamment dans un bain dont la température est comprise entre 20°C et 90°C.

Il est particulièrement avantageux que cet enrobage du produit s'accompagne de la projection de morceaux solides, de dimensions comprises par exemple entre 1 mm et 4 mm, et qui se fixent sur l'enrobage.

Ces morceaux solides peuvent être par exemple choisis parmi les fruits secs, les fruits déshydratés, les légumes, et/ou les épices, et/ou les aromates.

L'enrobage est de préférence réalisé en une matière, notamment gélifiée ou concrète à froid, qui n'adhère pas à un matériau de conditionnement du produit tel qu'une barquette en matière plastique.

Le procédé peut mettre en oeuvre après le démoulage, et le cas échéant après l'enrobage, un conditionnement du produit sous atmosphère modifiée.

Le dosage peut être réalisé dans au moins un moule recyclable, à une température au moins égale à 50°C.

Le refroidissement peut être réalisé dans une saumure dont la température est comprise entre -10°C et -40°C.

Ce refroidissement peut être réalisé de manière que la température du produit, dans au moins ladite couche périphérique congelée, soit comprise entre - 4°C et -20°C.

Le réchauffage peut être réalisé par trempage dans de l'eau dont la température est comprise entre 15°C et 60°C.

Lors du démoulage, la température du produit, dans au moins la partie de la couche périphérique qui reste congelée, est avantageusement comprise entre -2°C et -18°C.

Selon un mode de réalisation préféré, le dosage est réalisé en plusieurs temps de manière à réaliser un produit composé de plusieurs couches et/ou un produit fourré.

D'autres caractéristiques et avantages de l'invention apparaîtront mieux à la lecture de la description qui va suivre, donnée à titre non limitatif, en liaison avec les dessins, dans lesquels :

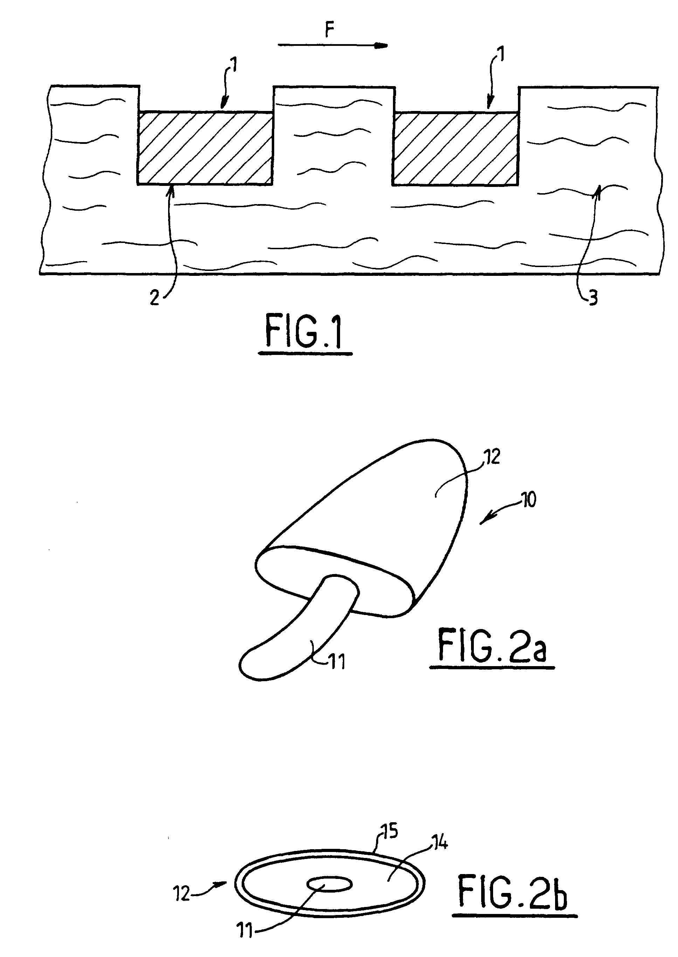

- la figure 1 est un schéma représentant l'opération de dosage et de refroidissement du produit ;
- les figures 2a et 2b représentent respectivement en perspective et en coupe, un produit selon l'invention.

L'invention s'applique à tous les fromages frais ou fondus dosables à chaud, et plus généralement à tous les produits laitiers ou fromagers, notamment à texture crémeuse, susceptibles d'être dosés à chaud.

Une crème est tout d'abord réalisée dans une cuve avec un agitateur, le temps d'agitation étant par exemple compris 4 à 30 minutes à une température supérieure à 75°C. Ensuite les produits 1 sont dosés dans des moules 2, par exemple en acier inoxydable ou en matière plastique, pour former des produits individuels dont le poids est par exemple compris entre 5 g et 200 g. Pendant ce dosage, la température de la pâte reste supérieure à 50°C environ.

Les moules 2 contenant les produits 1 sont ensuite refroidis, par exemple dans un bain de saumure alimentaire à une température comprise entre -10°C et -40°C de manière à obtenir une congélation au moins partielle du produit, sur sa périphérie, à une température comprise entre -4°C et -20°C. Cette opération de refroidissement dure avantageusement moins de 3 minutes, par exemple entre 2 et 3 minutes, pour un produit de masse inférieure ou égale à 40 g. Pour les produits munis d'un bâtonnet de préhension 11, celui-ci est mis en place pendant cette étape de refroidissement à un moment choisi pour que la viscosité de la pâte soit suffisante pour assurer le maintien en place du bâtonnet disposé verticalement.

Ensuite, les moules 2 sont réchauffés par trempage dans de l'eau à une température comprise entre environ 15°C et 60°C, ce qui permet une décongélation superficielle du produit et un démoulage de celui-ci, alors même que sa rigidité reste assurée par le fait qu'il existe toujours au moins une couche superficielle, par exemple d'au moins quelques millimètres d'épaisseur, qui reste congelée, par exemple à une température comprise entre -2°C et -18°C, ce qui évite tout collage et toute déformation du produit lors de son démoulage.

Un enrobage peut être ensuite appliqué au produit, notamment par trempage dans un bain d'enrobage à une température comprise entre environ 20°C et 90°C. Le contact de l'enrobage chaud sur la surface froide du produit entraîne la solidification immédiate ou quasi immédiate de l'enrobant.

L'enveloppe 15 qui entoure le coeur 14 des produits individuels 12, éventuellement munis de leur bâtonnet de préhension 11, peut être de nature différente de celle du produit enrobé, par exemple matière grasse laitière, matière grasse végétale, préparation gélifiée sucrée ou non.

Cette enveloppe permet en particulier d'assurer ultérieurement la tenue du coeur 14, ainsi qu'un aspect visuel uniforme, pendant la conservation ultérieure du produit à l'état non congelé, notamment à des températures comprises entre 2°C et 8°C (températures de conservation normale des produits laitiers frais).

En outre, lors de la dégustation, le consommateur perçoit un contraste entre l'enveloppe 15, plus résistante, et le coeur, par exemple crémeux ou friable, ce qui produit une sensation organoleptique agréable.

Le bâtonnet 11 peut être déposé en continu dans le produit 1 durant la phase de refroidissement. Ce bâtonnet peut être en bois ou en plastique et peut servir également de support promotionnel. Il permet une prise en main hygiénique du produit par le consommateur.

On notera en outre que l'enrobage 15, par exemple en matériau gélifié, permet d'éviter un collage du produit dans son emballage, en général une barquette en matière plastique.

La réalisation de l'enrobage 15 par trempage à chaud permet également la fixation de petits morceaux de 1 à 4 millimètres propulsés, par exemple par air pulsé, sur la surface du produit. Ces petits morceaux peuvent être des fruits secs et/ou des fruits déshydratés et/ou des légumes et/ou des épices et aromates. Ils permettent de conférer au produit un aspect original et d'influer sur ses propriétés organoleptiques.

Le procédé permet la réalisation de produits de formes variées à trois dimensions, avec ou sans bâtonnet, qui seraient difficilement réalisables par des procédés traditionnels.

En particulier, le produit selon l'invention est avantageux dans le cas de produits non cohésifs à texture fondante, par exemple des fromages fondus qui présentent une faible tenue intrinsèque.

L'invention s'applique en particulier au fromage frais ou fondu dosable à chaud présentant un extrait sec compris entre 25 et 50%, et une proportion pondérale de matières grasses en extrait sec comprise entre 30% et 75%, et un pH compris entre 4,8 et 6.

L'invention permet, notamment pour des produits riches en eau (supérieur ou égal à 50% en poids) de réaliser des produits moulés, tout en évitant l'utilisation d'un agent démoulant et ce même pour les textures crémeuses et collantes.

Un autre avantage de l'invention, est que les produits peuvent être à faible teneur en gélifiant, puisque le procédé n'impose pas de recourir à de tels additifs pour renforcer les propriétés mécaniques du produit.

**Exemple I :** On réalise un frais fondu à 42% d'extrait sec, 68% en poids de matières grasses dans l'extrait sec et un pH de 5,6 environ, à partir d'un caillé frais, de protéines de lait, de sels de fonte et de texturant.

Le chauffage est réalisé à 90°C. La pâte est ensuite dosée à une température comprise entre 75 et 80°C dans des moules recyclables en acier inoxydable de forme arrondie qui trempent dans une saumure de chlorure de calcium à une température comprise entre -20°C et -40°C. Le fromage commence à refroidir à 60-65°C et on dépose en automatique un bâtonnet plastique représentant un personnage. En moins de 3 minutes, le produit se retrouve congelé en tout ou partie à une température comprise entre -7°C et -15°C. Le moule est alors réchauffé par de l'eau à 20°C et instantanément ou quasi-instantanément la périphérie du produit décongèle, ce qui permet l'extraction du fromage de son moule.

Le produit est alors enrobé par trempage à 85°C dans une spécialité laitière à 28% en poids d'extrait sec (caillé frais, protéines de lait, sels de fonte, épaississant).

Le contact de l'enrobage chaud sur la surface froide du produit entraîne la solidification immédiate de l'enrobant. La présence d'un épaississant permet de gélifier l'enrobage en lui conférant une tenue mécanique, ainsi que des propriétés d'anti-collage sur le conditionnement du produit. L'épaisseur de l'enrobage ainsi obtenu est par exemple comprise entre 0,5 mm et 2 mn Le produit est ensuite transporté et conditionné dans une alvéole plastique thermoformée et operculée avec une atmosphère protectrice. Le stockage du produit se réalise à une température comprise entre 2°C et 8°C. Le produit a une texture crémeuse et un goût frais de crème.

**Exemple II :** On réalise un fromage fondu à 46% d'extrait sec, 50% en poids de matières grasses dans l'extrait sec et un pH de 5,6 environ, à partir d'emmenthal, de gouda, de cheddar ou de maasdam, de protéines de lait, de beurre, de sels de fonte et de poudre de sérum.

Le produit est alors enrobé par trempage à 85°C dans une spécialité laitière à 28% en poids d'extrait sec (pâte pressée, beurre, protéines de lait et texturant).

La suite du procédé est identique à celle de l'exemple I (solidification de l'enrobant, gélification, etc....).

**Exemple III :** On réalise une spécialité fromagère fondue sucrée, à 45% d'extrait sec, 60% en poids de matières grasses dans l'extrait sec et un pH de 5,6 environ, à partir d'un caillé frais, de protéine de lait, de sucre, de pulpes et arômes de fruits, de sels de fonte et de texturants.

La suite du procédé est identique à celle de l'exemple I.

## Revendications

1. Procédé de moulage d'un produit laitier ou fromager, mettant en oeuvre un dosage de ce produit dans au moins un moule, ledit produit présentant une teneur en extrait sec comprise entre 25% et 50%, une proportion pondérale de matière grasse dans l'extrait sec comprise entre 30% et 75% et un pH de préférence compris entre 4,8 et 6 **caractérisé en ce qu'**il comporte :
a) un refroidissement pour congeler au moins une couche périphérique du produit,
b) un réchauffage du (ou des) moules pour décongeler une région superficielle de ladite couche périphérique,
c) un démoulage du produit.

2. Procédé selon la revendication 1, **caractérisé en ce qu'**il comporte après ledit dosage, et de préférence au cours du refroidissement a) une mise en place d'un bâtonnet de préhension du produit.

3. Procédé selon l'une des revendications 1 ou 2, **caractérisé en ce qu'**il met en oeuvre après le démoulage c), un enrobage d) du produit.

4. Procédé selon la revendication 3, **caractérisé en ce que** ledit enrobage est réalisé par trempage.

5. Procédé selon la revendication 4, **caractérisé en ce que** le trempage est réalisé par passage dans un bain dont la température est comprise entre 20°C et 90°C.

6. Procédé selon une des revendications 3 à 5, **caractérisé en ce que** l'enrobage du produit s'accompagne de la projection de morceaux solides, de dimension comprise par exemple entre 1 mm et 4 mm, et qui se fixent sur l'enrobage.

7. Procédé selon la revendication 6, **caractérisé en ce que** les morceaux solides sont choisis parmi les fruits secs et/ou les fruits déshydratés, et/ou les légumes et/ou les épices et/ou les aromates.

8. Procédé selon une des revendications 3 à 7, **caractérisé en ce que** l'enrobage est réalisé en une matière notamment gélifiée, qui n'adhère pas à un matériau de conditionnement du produit tel qu'une barquette en matière plastique.

9. Procédé selon une des revendications précédentes, **caractérisé en ce qu'**il met en oeuvre après le démoulage c), et le cas échéant après l'enrobage d), un conditionnement du produit sous atmosphère modifiée.

10. Procédé selon une des revendications précédentes, **caractérisé en ce que** le dosage est réalisé dans un moins un moule recyclable, à une température au moins égale à 50°C.

11. Procédé selon une des revendications précédentes, **caractérisé en ce que** ledit refroidissement b) est réalisé dans une saumure dont la température est comprise entre -10°C et -40°C.

12. Procédé selon une des revendications précédentes, **caractérisé en ce que** le refroidissement a) est réalisé de manière que la température du produit, dans au moins ladite couche périphérique congelée, soit comprise entre -4°C et -20°C.

13. Procédé selon une des revendications 11 ou 12, **caractérisé en ce que** la durée du refroidissement est inférieure à 3 minutes.

14. Procédé selon une des revendications précédentes, **caractérisé en ce que** le réchauffage b) est réalisé par trempage dans de l'eau dont la température est comprise entre 15°C et 60°C.

15. Procédé selon une des revendications précédentes, **caractérisé en ce que** lors du démoulage, la température du produit, dans au moins la partie de la couche périphérique qui reste congelée est comprise entre -2°C et -18°C.

16. Procédé selon une des revendications précédentes, **caractérisé en ce que** le dosage est réalisé en plusieurs temps de manière à réaliser un produit composé de plusieurs couches et/ou un produit fourré.

17. Procédé selon une des revendications précédentes, **caractérisé en ce qu'**au cours de a), seule une couche périphérique de produit est congelée.

## Claims

1. Method for moulding a milk or cheese product, employing the metering of this product into at least one mould, the said product having a dry matter content of between 25 % and 50 %, a weight proportion of fat in the dry matter of between 30 % and 75 % and a pH preferably between 4.8 and 6, **characterized in that** it comprises :
a) cooling in order to freeze at least one peripheral layer of the product.
b) reheating the moulds or moulds in order to defrost a surface region of the said peripheral layer,
c) removing the product from the mould.

2. Method according to Claim 1, **characterized in that** it includes after the said metering, and preferably during cooling a) the insertion of a stick for holding the product.

3. Method according to one of Claims 1 or 2, **characterized in that** the product is enrobed d) after being removed from the mould c).

4. Method according to Claim 3, **characterized in that** the said enrobing is performed by dipping.

5. Method according to Claim 4, **characterized in that** dipping is performed by passage through a bath the temperature of which lies between 20°C and 90°C.

6. Method according to one of Claims 3 to 5, **characterized in that** the enrobing of the product is accompanied by the spraying of solid pieces having a size of between 1 mm and 4 mm for example and which become attached to the enrobed coating.

7. Method according to Claim 6, **characterized in that** the solid pieces are chosen from dried fruits and /or dehydrated fruits, and /or vegetables and/or spices and/or herbs.

8. Method according to one of Claims 3 to 7, **characterized in that** enrobing is performed with a material that is in particular gelled and which does not adhere to the packaging material for the product such as a tray made of plastic material.

9. Method according to one of the preceding Claims, **characterized in that** the product is packaged under a modified atmosphere after removal from the mould c) and optionally after enrobing d).

10. Method according to one of the preceding Claims, **characterized in that** metering is performed into at least one recyclable mould at a temperature at least equal to 50°C.

11. Method according to one of the preceding Claims, **characterized in that** the said cooling b) is performed in brine of which the temperature lies between -10°C and -40°C.

12. Method according to one of the preceding Claims, **characterized in that** the cooling a) is performed so that the temperature of the product, in at least the said frozen peripheral layer, lies between -4°C and -20°C.

13. Method according to one of Claims 11 or 12, **characterized in that** the period of cooling is less than 3 minutes.

14. Method according to one of the preceding Claims, **characterized in that** the reheating b) is performed by dipping in water of which the temperature lies between 15°C and 60°C.

15. Method according to one of the preceding Claims, **characterized in that** on removal from the mould, the temperature of the product, in at least the part of the peripheral layer that remains frozen, lies between -2°C and -18°C.

16. Method according to one of the preceding Claims, **characterized in that** metering is performed in several steps so as to produce a product that is composed of several layers and/or is a filled product.

17. Method according to one of the preceding Claims, **characterized in that** during a) only a peripheral layer of the product is frozen.

## Patentansprüche

1. Verfahren zum Formen eines Milch- oder Käseproduktes unter Anwendung einer Dosierung des Produktes in mindestens eine Form, wobei das Produkt einen Trockenextraktgehalt zwischen 25% und 50%, einen Gewichtsanteil von Fett im Trockenextrakt zwischen 30% und 75% und vorzugsweise einen pH zwischen 4,8 und 6,0 aufweist, **dadurch gekennzeichnet, dass** es umfasst:
a) Abkühlen, um mindestens eine periphere Schicht des Produktes zu gefrieren;
b) Wiedererwärmen der Form (oder der Formen), um eine oberflächliche Region der peripheren Schicht wieder aufzutauen;
c) Entformen des Produktes.

2. Verfahren nach Anspruch 1, **dadurch gekennzeichnet, dass** es nach der Dosierung und vorzugsweise während des Abkühlens a) Einsetzen eines Greifstabs für das Produkt umfasst.

3. Verfahren nach Anspruch 1 oder Anspruch 2, **dadurch gekennzeichnet, dass** nach dem Entformen c) eine Umhüllung d) des Produktes durchgeführt wird.

4. Verfahren nach Anspruch 3, **dadurch gekennzeichnet, dass** die Umhüllung durch Eintauchbeschichten durchgeführt wird.

5. Verfahren nach Anspruch 4, **dadurch gekennzeichnet, dass** das Eintauchbeschichten durch Durchführen durch ein Bad, dessen Temperatur zwischen 20°C und 90°C liegt, durchgeführt wird.

6. Verfahren nach einem der Ansprüche 3 bis 5, **dadurch gekennzeichnet, dass** die Umhüllung des Produktes mit dem Aufbringen von festen Stücken mit einer Abmessung, z. B. zwischen 1 mm und 4 mm, die sich an der Umhüllung festsetzen, einhergeht.

7. Verfahren nach Anspruch 6, **dadurch gekennzeichnet, dass** die festen Stücke unter Trockenfrüchten und/oder entwässerten Früchten und/oder Gemüsen und/oder Gewürzen und/oder Aromasubstanzen ausgewählt werden.

8. Verfahren nach einem der Ansprüche 3 bis 7, **dadurch gekennzeichnet, dass** die Umhüllung mit einem Material, insbesondere einem gelierten Material, erfolgt, das nicht an einem Verpackungsmaterial des Produktes, z. B. einem Behälter aus Kunststoffmaterial, haftet.

9. Verfahren nach einem der vorangehenden Ansprüche, **dadurch gekennzeichnet, dass** nach dem Entformen c) und gegebenenfalls nach der Umhüllung d) eine Verpackung des Produktes unter modifizierter Atmosphäre durchgeführt wird.

10. Verfahren nach einem der vorangehenden Ansprüche, **dadurch gekennzeichnet, dass** die Dosierung in mindestens einer recyclebaren Form bei einer Temperatur von mindestens 50°C durchgeführt wird.

11. Verfahren nach einem der vorangehenden Ansprüche, **dadurch gekennzeichnet, dass** das Abkühlen a) in einer Salzlösung durchgeführt wird, deren Temperatur zwischen -10°C und -40°C liegt.

12. Verfahren nach einem der vorangehenden Ansprüche, **dadurch gekennzeichnet, dass** das Abkühlen a) derart durchgeführt wird, dass die Temperatur des Produktes zumindest in der gefrorenen peripheren Schicht zwischen -4°C und -20°C liegt.

13. Verfahren nach Anspruch 11 oder 12, **dadurch gekennzeichnet, dass** die Dauer des Kühlens unter 3 Minuten liegt.

14. Verfahren nach einem der vorangehenden Ansprüche, **dadurch gekennzeichnet, dass** das Wiedererwärmen b) durch Eintauchen in Wasser, dessen Temperatur zwischen 15°C und 60°C liegt, durchgeführt wird.

15. Verfahren nach einem der vorangehenden Ansprüche, **dadurch gekennzeichnet, dass** die Temperatur des Produktes zumindest in dem Teil der peripheren Schicht, die gefroren bleibt, zwischen -2°C und -18°C während des Entformens ist.

16. Verfahren nach einem der vorangehenden Ansprüche, **dadurch gekennzeichnet, dass** die Dosierung mehrmals derart durchgeführt wird, dass ein Produkt, das aus mehreren Schichten besteht, und/oder ein gefülltes Produkt hergestellt wird.

17. Verfahren nach einem der vorangehenden Ansprüche, **dadurch gekennzeichnet, dass** im Verlauf von a) nur eine periphere Produktschicht gefroren wird.
